(19) Europäisches Patentamt
European Patent Office
Office européen des brevets

(11) **EP 4 613 378 A1**

(12) **EUROPEAN PATENT APPLICATION**

(43) Date of publication:
**10.09.2025 Bulletin 2025/37**

(21) Application number: **24161842.0**

(22) Date of filing: **06.03.2024**

(51) International Patent Classification (IPC):
***B01L 3/02*** *(2006.01)*

(52) Cooperative Patent Classification (CPC):
**B01L 3/0203; B01L 2300/0858**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Mettler-Toledo GmbH**
**8606 Greifensee (CH)**

(72) Inventors:
• **Dobrinski, Heiko**
**8620 Wetzikon (CH)**
• **Oppliger, Thierry**
**8606 Greifensee (CH)**
• **Bischof, Nico**
**8304 Wallisellen (CH)**

(74) Representative: **Mettler-Toledo**
**IP Department**
**Im Langacher 44**
**8606 Greifensee (CH)**

(54) **DIFFUSION TIP**

(57) Disclosed is a diffusion tip (1) for a titration line (2) comprising a body (11) having a proximal end (111) and a distal end (112) and a circumferential surface. A flute (12) is provided in the circumferential surface of the diffusion tip body (11). The flute has a proximal end and a distal end. The flute (12) further has a first, proximal flute section (121) extending from the proximal end of the flute to a distal end of the first flute section. The distal end of the first flute section is proximal from the distal end of the body (11). The flute (12) has a second flute section (122) extending from a proximal end to the distal end of the flute. The proximal end of the second flute section (122) is distal from the proximal end of the body (11) and proximal from the distal end of the first flute section (121). The first flute section and the second flute section do not intersect. The flute further has a transverse flute (123) section connecting the first flute section (121) and the second flute section (122). The transverse flute section (123) joins into the first flute section (121) and into the second flute section (122), wherein the transverse flute section (123) joins the first flute section (121) at a first proximal-distal position of the diffusion tip body and the transverse flute section joins the second flute section at a second proximal-distal position of the diffusion tip body, wherein the second proximal-distal position is proximal from the first proximal-distal position.

Fig. 1

## Description

## Technical Field

The present disclosure relates to a diffusion tip for a titration hose as set forth in the claims.

## Background Art

Titrating devices are well known in which a quantity of a titrating agent of known concentration is added to a sample liquid being tested until a certain phenomenon occurs-for example, the measurable change in potential across a pair of electrodes submerged in the sample. The desired content of a certain component in the sample can then be determined as a function of the quantity of titrating agent required to produce the measurable change in the sample.

It is obvious that the accuracy of the measurement depends essentially on the accuracy by which the consumption of the titration agent may be determined. Thus, it is customary to cause the diffusion tip of a burette to be immersed in the sample to prevent any drop error from developing.

However, the use of an immersed diffusion tip presents a further problem, namely, that of the efflux of an uncontrolled quantity of the titrating agent leaving the diffusion tip when the density of the titrating agent is greater than that of the sample being tested which frequently occurs, for example, during water determinations according to the procedures of Karl Fischer. In precision measurements, this results in noticeable errors which increase the longer the diffusion tip remains in the sample and which add to the error resulting from the diffusion which occurs through the boundary surface between the titration agent and the sample. One solution to this problem was proposed in the Metrohm Titroproccssor 636 apparatus, where the titrator conduit was isolated from the sample by a membrane operable as a one-way valve, whereby the titration agent was permitted to exit from the apparatus, but the sample was prevented from coming into the conduit. In this way, both the diffusion error and the density error which results when the titration agent has a specific density greater than that of the sample, are substantially completely eliminated. One drawback to this known system is that titrations with maximum resolution cannot be performed in the microliter range since such small increments of the titration agent cannot overcome the closing pressure of the membrane.

To avoid this disadvantage, it was proposed in the Titrator DL 40 apparatus produced by Mettler Instrumente AG, to provide the diffusion tip with a siphon in the form of a circular glass loop. Owing to the known siphon principle, this apparatus has the effect of permitting a precisely defined limited quantity of a specimen having a lower specific density than that of the titrating agent to enter the upper circle arc of the siphon loop. This quantity can be limited to a few microliters, depending on the dimensions of the diffusion tip. Owing to the regular flushing of the diffusion tip normally performed after the end of each titration in a precision measurement, the small quantity of sample fluid does not enter into the measurement error, since the same volume of foreign liquid is present at the beginning and at the end of a measurement, thereby neutralizing the effect on a measurement. Very small volumes can be dosed by the apparatus, although at the price of the diffusion error which must be accepted.

The circular glass siphon has the inherent drawbacks of relatively large manufacturing cost, susceptibility to contamination owing to the problem of careful cleaning, and finally, the great danger of breakage.

US 6,182,517 suggests using a check valve. However, moveable parts may be prone to sticking, for instance, dependent on the fluids used. US 4,719,086 suggests to use a diffusion tip inserted into a hose or line for supplying the titration fluid, wherein a siphon-type flute is provided on the circumferential surface of the diffusion tip body for the titration fluid to by supplied through the flute. The flute forms a siphon means by, essentially, providing two 180° bends with a vertically ascending section therebetween, and arranged between two vertically descending flute sections, which in turn open at a proximal face and a distal face of the diffusion tip body. The diffusion tip is intended to be dipped into the sample. The function is described such that, if the titrating agent has a specific density less than or equal to that of the sample solution, the boundary surface will coincide with the outlet opening at the lower extremity of the passage formed by the flute between the circumferential surface of the diffusion tip body and the hose or line. If the titration agent has a specific density greater than that of the sample, owing to the density difference, the sample liquid will enter the siphon-shaped passage and, owing to the siphon effect, the boundary surface between the sample liquid and the titration agent will form in the vertically ascending section. It was observed, however, that in certain instances, due to the 180° bends in the siphon passage, pressure losses may aggravate fine dosing of the titration agent and tend to clogging.

## Summary of invention

Most generically, an objective of the herein claimed subject matter may be seen in providing a device for preventing sample fluid from entering a hose or line through which a titration agent is supplied into the sample, while at the same time preventing an efflux of an uncontrolled quantity of the titrating agent leaving the diffusion tip. In a more specific aspect, it is an objective of the herein disclosed subject matter to provide a titration tip as initially mentioned. In a still more specific aspect, the device shall overcome certain drawbacks of the described art. In still more specific aspects, the device shall enable fine dosing of the titrating agent and/or improve reliability, e.g., by a lower or, ideally, no tendency to clogging.

This is achieved by the subject matter of claim 1. Further effects and advantages of the disclosed subject matter, whether explicitly mentioned or not, will become apparent in view of the disclosure provided below.

Accordingly, disclosed is a diffusion tip for a titration hose, comprising a body having a proximal end and a distal end and a circumferential surface. A flute is provided in the circumferential surface of the diffusion tip body, the flute having a proximal end and a distal end. The flute has a first flute section extending from the proximal end of the flute to a distal end of the first flute section. The distal end of the first flute section is proximal from the distal end of the body. The flute further has a second flute section extending from a proximal end of the second flute section to the distal end of the flute. The proximal end of the second flute section is distal from the proximal end of the body and proximal from the distal end of the first flute section. Accordingly, the first flute section and the second flute section have an axial overlap on the diffusion tip body. However, the first flute section and the second flute section do not intersect. At each proximal-distal position of the diffusion tip body, i.e., at each position on the diffusion tip body between the proximal end and the distal end, at least in an axial or proximal-distal section of the body of the diffusion tip in which the first and second flute sections overlap, the first flute section and the second flute section are circumferentially offset from each other. The flute further has a transverse flute section connecting the first flute section and the second flute section and extending between the first flute section and the second flute section, wherein the transverse flute section joins into the first flute section and into the second flute section. In aspects, the flute consists of the first flute section, the second flute section and the transverse flute section. The transverse flute section joins the first flute section at a first proximal-distal position of the diffusion tip body and the transverse flute section joins the second flute section at a second proximal-distal position of the diffusion tip body, wherein the second proximal-distal position is proximal from the first proximal-distal position. Said positions may be measured at an intersection of the centerlines of the transverse flue section and a respective centerline of the first and second flute sections.

The term transverse flute section may in embodiments designate a flute section which spans, slopingly ascending, a part of the circumference of the diffusion tip body, or, in other aspects spans an azimuthal distance or circumferential angular distance, i.e., an angular distance when measured around a proximal-distal axis of the diffusion tip body. The transverse flute section may, in particular, extend circumferentially along a part of the circumference of the diffusion tip body on the circumferential surface of the diffusion tip body and includes slopes larger than zero and smaller than 90° with the circumferential direction on the circumferential surface of the diffusion tip body.

Circumference, or circumferential, does not necessarily imply a body with a circular or oval or elliptic cross section, but may also refer to a body having a, for instance, polygonal cross section. It is understood that in embodiments the diffusion tip body may be a cylinder or obliquely truncated cylinder having a circular cross section.

Compared to the art cited above, the flute forming a flow channel, when the diffusion tip is inserted into a tube or hose or other supply line, does in aspects not comprise a vertical ascending section. It was discovered that a slopingly ascending transverse flute section may also be suitable to achieve the siphon effect, while avoiding the 180° bents suggested in the art. Thus, when a titrating agent is admeasured to a sample through a flow channel defined within the flute, pressure losses are reduced when compared to the art, thus enabling an even more precise dosing of the titrating agent. Moreover, the risk of clogging the flow channel is reduced in avoiding the narrow bents and reducing the overall flow deflection.

The proximal end of the body of the diffusion tip is understood as an end of the body which is intended to be positioned upstream, in the flow direction of a titrating agent diffused into a sample, while the distal end in intended to designate the end of the body which is intended to be immersed into the sample, i.e. a downstream end in the flow direction of a titrating agent diffused into the sample. In embodiments, the diffusion tip may be symmetric in a sense that each end of the body may be considered the proximal end or the distal end while the other end of the body may be considered the other one of the proximal end and the distal end. In other instances, however, there may be a clear distinction of which end of the body is the proximal end and which end of the body is the distal end.

It may in particular be the case that the first flute section, the second flute section and the transverse flute section may have identical cross sections.

In certain exemplary embodiments, the cross sectional area of the first flute section reduces along at least part of its length in direction towards the transverse flute section. It may further be provided that the cross sectional areas of the traverse flute section and/or the second flute section are constant and/or identical. A tapering cross sectional area of the first flute section increases the velocity of the fluid when pushed through the diffusion tip and thereby helps to prevents clogging. Further, the pressure on a tube or hose or other supply line forming a flow channel together with the flute, when the diffusion tip is inserted into such a supply line, is reduced at the proximal end of the diffusion tip compared to more distal regions. This prevents an unintended deformation of the supply line due to the fluid pressure, which in turn might cause, for instance, leakage from the intended flow path defined by the flute.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

It is moreover noted that in the context of the present application the terms "bordering" and "adjacent" as well as "bordering" and "adjacent to" are considered as synonyms.

The transverse flute section, when looking onto the circumferential surface of the body of the diffusion tip, is bordered by a proximal boundary line and a distal boundary line. It may in aspects be provided that a most distal point of a proximal boundary line of the transverse flute section is distal from a most proximal point of a distal boundary line of the transverse flute section. In other words, a proximal joint cross section at which the transverse flute section joins the second flute section is arranged proximal from a distal joint cross section at which the transverse flute section joins the first flute section, and there is no overlap between said joint cross sections in the proximal-distal direction.

It may be provided that the transverse flute section joins the first flute section at the distal end of the first flute section. It may likewise be provided that the transverse flute section joins the second flute section at the proximal end of the second flute section.

In exemplary embodiments it may be provided that at least one of the first flute section and/or the second flute section and/or the transverse flute section is a straight flow section. In an aspect, it might be stated that a flow through a straight flute section is not deflected across the width of the flute. The width of a flute may be defined as the distance between the borders of the flute on the circumferential outer surface of the diffusion tip body. It may be stated in an aspect that a straight flow section, or a centerline thereof, respectively, is located on a plane which is, in particular, non-orthogonal to the proximal-distal axis of the diffusion tip body. In particular, a straight flow section extends straight on a developed view of an outer surface of the diffusion tip. The term "developed view" shall be understood to translate the German term "Abwicklung" of a geometric body on a plane. In another aspect, the path of a straight flute section may be described by $\frac{dh}{ds} = constant,$ wherein $h$ is a coordinate along the proximal-distal direction of the diffusion tip body and $s$ is measured along the length of the flute section In an aspect, a straight flute section, i.e., at least one of the first flute section and/or the second flute section and/or the transverse flute section, or a centerline thereof has a constant lead angle. It is noted, in this respect, that, generally, each point of the diffusion tip body may be defined in cylindrical coordinates by an axial position $h$, a radial distance $r$ from the longitudinal axis, and an azimuthal angle $\varphi$. Thus, in this equation, $h$ is a coordinate along the proximal-distal direction of the diffusion tip body, r is the distance of a point on the diffusion tip body from the proximal-distal axis of the diffusion tip body

and $\phi$ is the azimuthal angle of the diffusion tip body measured around the proximal-distal axis of the diffusion tip body, i.e., the azimuthal angle denotes a circumferential angular position with respect to the diffusion tip body. A transverse flute section may to this extent follows a path which may be defined in cylindrical coordinates, with the proximal-distal axis of the diffusion tip body defining the longitudinal axis of the coordinate system, by $dh = m \cdot rd\varphi$ or $dh = m \cdot rcos(\Phi) \, d\varphi$ wherein, if m is a constant and $m \neq 0$, the transverse flute section can be considered to be a straight flute section, even if r changes along the path.

The flute may be provided such that a fluid flowing from the proximal end of the flute to the distal end of the flute is deflected left-hand by a cumulated, or total, left-hand deflection angle and deflected right-hand by a cumulated, or total, right-hand deflection angle, wherein at least one of the cumulated left-hand deflection angle and the cumulated right-hand deflection angle is less than 180° . In more specific instances, each of the cumulated left-hand deflection angle and the cumulated right-hand deflection angle may be less than 180° . In further aspects, at least one of the of the cumulated left-hand deflection angle and the cumulated right-hand deflection angle may be less than 150° , less than 135° , or less than 120° . In still further aspects, each of the of the cumulated left-hand deflection angle and the cumulated right-hand deflection angle may be less than 150° , less than 135° , or less than 120° .

In further aspects, it may be provided that the transverse flute section is a straight flute section and the first flute section is a straight flute section, wherein an angle included between the first flute section, i.e., in particular, between a centerline or axis of the first flute section, and the transverse section, i.e., in particular, a centerline or axis of the transverse flute section, is greater than 0° and smaller than 90° and may in even more particular embodiments be at least one of 30° or more and/or 60° or less. In other words, the first flute section and the transverse flute section are not parallel to each other.

It may likewise be provided that the transverse flute section is a straight flute section and the second flute section is a straight flute section, wherein an angle formed between the transverse flute section i.e., in particular, between a centerline or axis of the transverse flute section, and the second flute section, i.e., in particular, between a centerline or axis of the second flute section, is greater than 0° and smaller than 90° and may in even more particular embodiments be at least one of 30° or more and/or 60° or less. In other words, the transverse flute section and the second flute section are not parallel to each other.

The skilled person will appreciate that, the smaller the flow deflection angles are, the smaller the flow resistance and the risk of clogging in a flow channel formed by the flute are. On the other hand, the less sloped the transverse channel is, i.e., the smaller a lead angle or a slope between the transverse flute section and a circumferential direction on the circumferential surface of the diffusion tip body is, the smaller is the proximal-distal distance spanned by the transverse flute section along a given circumferential extent, and the smaller is, consequently, a height difference which may be provided by the siphon formed by the transverse flute section.

In embodiments, it may be provided that the first flute section and the second flute section have, along their extent between the respective distal and proximal ends, a constant circumferential angular, i.e., azimuthal, position on the surface of the diffusion tip body around an axis of the diffusion tip body. In other aspects, the first flute section and the second flute section are both straight flute sections and extend parallel to an axis of the diffusion tip body. In still other aspects, the first and second flute section both have a constant azimuth along their longitudinal extent when described in cylindrical coordinates on the surface or the diffusion tip body as outlined above. However, embodiments are conceivable in which the first and/or second flute sections are slanted relative to an axis of the diffusion tip body in circumferential direction, for example form a lead angle of less than 90° with a circumferential direction on the circumferential surface of the diffusion tip body, which may be useful to further reduce the deflection angles referred to above. Further, embodiments are conceivable in which the first and/or second flute sections are slanted relative to an axis of the diffusion tip body in radial direction, i.e., an angle is formed between the axis of the diffusion tip body and axis of the first respectively the second flute section in a common plane of the respective axis. This may be useful to vary the cross sectional area of the flute. It is also conceivable that in embodiments the first and/or second flute sections are slanted relative to an axis of the diffusion tip body in both radial and circumferential direction, combining the above-mentioned effects.

It may in further embodiments be provided that in the proximal-distal section of the diffusion tip body in which the first flute section and the second flute section overlap axially, the first flute section and the second flute section are offset with respect to each other along the circumference of the diffusion tip body at each proximal-distal position, wherein a circumferential angular offset between the first and second flute sections is 45° or more, in particular 50° or more and more in particular 60° or more. This distance supports sealing, or, in other words, supports suppressing parasitic flows, between the first flute section and the second flute section along the outer surface of the diffusion tip body when the diffusion tip is used as intended, such that fluid communication between the first flute section and the second flute section is at least essentially provided through the transverse flute section only.

In non-limiting embodiments, the first flute section extends from the proximal end of the diffusion tip body and opens on a proximal face of the diffusion tip body. Likewise, it may be provided that the second flute section extends to the distal end of the diffusion tip body and opens on a distal face of the diffusion tip body.

At least a proximal section of the diffusion tip body may be configured to be received within a supply line, e.g., a tube or hose. An inner wall of the supply line in these embodiments may close those parts of the flute which are provided on the proximal section of the diffusion tip body on an outer surface of the diffusion tip body so as to form a closed channel with those parts of the flute. In particular, said at least proximal section may be cylindrical, in particular yielding a circular cross section, and the outer diameter of the diffusion tip body may be sized and configured to be received within the supply line. Said at least proximal section in particular extends from the proximal end of the diffusion tip body and beyond the distal end of the first flute section.

A distal section of the diffusion tip body may have a cross-sectional dimension which is larger than a cross-sectional dimension of the proximal section, for instance a larger diameter. In particular, said distal section may be dimensioned larger than the inner diameter of the supply line. The proximal end of said distal section may provide an abutment shoulder which is configured and intended to abut with an end of the supply line inside which the proximal section of the diffusion tip body is received. Said distal section may largely facilitate handling of the diffusion tip, for instance inserting the diffusion tip proximal section into a supply line and removing the diffusion tip proximal section from the supply line. Preferably, the diameter of said distal section may be the same as the outer diameter of the supply line. This allows on the one hand an easy exchange of the diffusion tip, if needed and minimizes on the other hand the footprint. Preferably, the distal section has a length between 1 and 4 mm, preferably between 2 and 3 mm, which allows to insert and remove the diffusion tip by hand.

Opposing side walls of the flute may diverge from the ground of the flute towards the circumferential surface of the diffusion tip body. Thus, a draft angle is provided which facilitates removing the diffusion tip from a form during manufacturing, for instance by injection molding. It will be appreciated that manufacturing the diffusion tip with the flute by injection molding saves considerably cost when compared to machining the flute in the circumferential surface of the diffusion tip body.

Further disclosed is a set of a diffusion tip of any above-described kind and a supply line. The diffusion tip comprises a proximal section with a first circumference and a distal section with a second circumference. The inner circumference of the supply line and the first circumference of the diffusion tip are adapted to each other and in particular configured such that the proximal section having the first circumference mas be snugly received within the supply line. Thus, the diffusion tip and the supply line form a press-fit connection when the proximal section is pressed into the supply line whereby the supply line supplements the flute to form closed flow channels. The second circumference of the diffusion tip is larger than the first circumference of the diffusion tip and forms an abutment shoulder on the outer circumference of the diffusion tip body, such that a proximal face of the distal section of the diffusion tip forms a limit stop when inserting the diffusion tip into the supply line. The outer circumference of the supply line may in embodiments be at least essentially equal to the second circumference of the diffusion tip. Preferably, the distal section has a length between 1 and 4 mm, preferably between 2 and 3 mm, which allows to insert and remove the diffusion tip by hand.

Further disclosed is a titration device. The titration device comprises a supply line, wherein a first end of the supply line is connected to a source of a titration agent and a second end of the supply line is provided with a diffusion tip of any above-described kind. At least a part of the diffusion tip is received within the supply line. In particular, the supply line may tightly enclose said at least part of the diffusion tip. The supply line may to this extent for instance be an elastic hose which grips the at least part of the diffusion tip by elastic resilience. At least the first flute section and the transverse flute section and a proximal section of the second flute section are located inside the supply line and, together with an inner wall of the supply line, form a flow channel on the circumferential surface of the body of the diffusion tip which is open towards the supply line. The diffusion tip may form an end of the titration device which is intended to be immersed into a sample.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

**Brief description of drawings**

The subject matter of the present disclosure is now to be explained in more detail by means of selected exemplary embodiments shown in the accompanying drawings. The figures show

Fig. 1     an exemplary embodiment of a diffusion tip;

Fig. 2     a detail of the diffusion tip of figure 1;

Fig. 3     a view of the exemplary diffusion tip along an axis of the diffusion tip body;

Fig. 4     an exemplary diffusion tip assembled with a supply line; and

Fig. 5     a schematic depiction of a titration device.

It is understood that the drawings may be highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

**Description of embodiments**

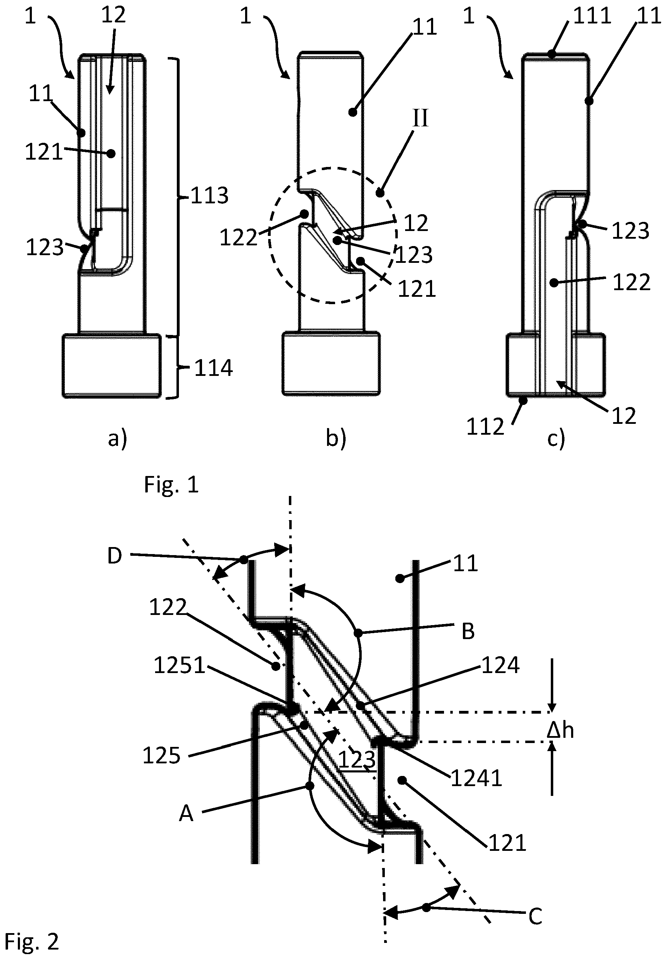

Figure 1 shows an exemplary embodiment of a diffusion tip 1 in three different views, wherein in figure 1b) a body 11 of diffusion tip 1 is rotated 90 degrees around a longitudinal or proximal-distal axis of body 11 when compared to the view of figure 1a). In figure 1c), body 11 of diffusion tip 1 is rotated a further 90 degrees in the same sense around the longitudinal axis of body 11 when compared to the view of figure 1b). As shown in figure 1c), wherein the person skilled in the art will readily transfer the respective information to figures 1a) and 1b), diffusion tip body 11 extends between a proximal end provided on a proximal face 111 and a distal end provided on a distal face 112. Diffusion tip 1, in the shown exemplary embodiment, further comprises a proximal section 113 of diffusion tip body 11 and a distal section 114 of diffusion tip body 11. As will be shown below, proximal section 113 of diffusion tip body 11 is intended to and configured for being received inside a supply line, e.g., a hose or a pipe, for the supply of a titrating agent. In particular, as is the case in the present exemplary embodiment, proximal section 113 of diffusion tip body 11 may be cylindrical with a diameter fitting inside the hose or pipe. Distal section 114 of diffusion tip body 11 has a larger cross-sectional dimension than proximal section 113 of diffusion tip body 11, for instance a larger diameter than proximal section 113 of diffusion tip body 11. Diffusion tip 1 further comprises a flute 12 on a circumferential surface of diffusion tip body 11. Flute 12 comprises, or, at least essentially, consists of, a first flute section 112 which extends distally to a distal end of the first flute section. In the shown exemplary embodiment, first flute section 121 extends proximally to and opens at proximal face 111 of diffusion tip body 11. With reference to figure 1c), a second flute section 122 of flute 12 extends proximally to a proximal end of second flute section 122. In the shown exemplary embodiment, second flute section 122 extends distally to and opens at distal face 112 of diffusion tip body 11. In the present embodiment, the first flute section is, and is also referred to below as, a proximal flute section, while the second flute section is, and is also be referred to below as, a distal flute section. As will be readily appreciated by a comparison of figures 1a) and 1c), the distal end of first, proximal flute section 121 is more distal than the proximal end of second, distal flute section 122. That is, in other words, proximal flute section 121 and distal flute section 122 have an axial, or proximal-distal, overlap. Further, proximal flute section 121 and distal flute section 122 are circumferentially offset on the circumferential surface of diffusion tip body 11. In the exemplary embodiment, proximal flute section 121 and distal flute section 122 both extend along and parallel to a proximal-distal axis of diffusion tip body 11. However, this is not necessarily the case, and any of the proximal flute section 121 and the distal flute section 122 may be slanted relative to the proximal-distal axis of diffusion tip body 11, which would mean the respective flute section would be essentially spiralling on the circumferential surface of diffusion tip body 11. At each proximal-distal position in an axial or proximal-distal direction of diffusion tip body 11 the first, proximal flute section and the second, distal flute section are circumferentially offset from each other. In other words, the first, proximal flute section and the second, distal flute section do not intersect or directly join each other. As shown in figure 1b), a transverse flute section 123 of flute 12 fluidly connects the distal end of proximal flute section 121 and the proximal end of distal flute section 122.

Figure 2 outlines detail II of figure 1b). Transverse flute section 123 has a proximal boundary line 124 and a distal boundary line 125 on the circumferential surface of diffusion tip body 11. As will be appreciated by virtue of figure 2, a most distal point 1241 of proximal boundary line 124 of transverse flute section 123 is distal from a most proximal point 1251 of distal boundary line 125 of transverse flute section 123 by a proximal-distal, or axial, offset $\Delta$ h. That means that a proximal joint cross section at which transverse flute section 123 joins second, distal flute section 122 is entirely proximal from a distal joint cross section at which transverse flute section 123 joins first, proximal flute section 121, and there is no overlap between said joint cross sections in the proximal-distal direction of diffusion tip body 11. Thus, the siphon effect referred to above is achieved. Further, transverse flute section 123 forms a flow deflection angle A with proximal flute section 121, which is smaller than 180°, and transverse flute section 123 forms a flow deflection angle B with distal flute section 122 which is smaller than 180°. Both flow deflection angles A and B, in the present exemplary embodiment, are about 135°. Flow deflection angles A and B are angles by which a flow of fluid flowing through flute 12 is deflected while flowing from one flute section into a subsequent - in the direction of flow - flute section. In this respect, when a fluid, as intended, flows through flute 12 from the proximal end 111 of the diffusion tip body 11 to the distal end 112 of diffusion tip body 11, flow deflection angle A is a right-hand deflection angle and flow deflection angle B is a left-hand deflection angle. Further, in the depicted exemplary embodiment proximal flute section 121, distal flute section 122 and transverse flute section 123 all extend straight on the circumferential surface of diffusion tip body. An angle C is included between proximal flute section 121 and transverse flute section 123. An angle D is included between transverse flute section 123 and distal flute section 122. It is noted that these angles may in particular be measured on a developed view of the circumferential outer surface of diffusion tip body 11 or on a local projection. As in the depicted exemplary embodiment proximal flute section 121 and distal flute section 122 both extend merely axially, i.e., along the proximal-distal direction on the circumferential surface of diffusion tip body, deflection angles A and B have identical absolute values. Also, included angles C and D have identical absolute values. These statements may more generally be made if proximal flute section 121 and distal flute section 122 form identical lead angle with the circumferential direction on the circumferential surface of diffusion tip body 11.

As will be appreciated, transverse flute section 123, or a centerline thereof, respectively, requires a minimum lead angle, that is, an angle measured against a merely circumferential direction on diffusion tip body 11, to fulfil the requirement that a proximal joint cross section at which transverse flute section 123 joins second, distal flute section 122 is arranged entirely proximal from a distal joint cross section at which transverse flute section 123 joins first, proximal flute section 121, and there is no overlap between said joint cross sections in the proximal-distal direction of diffusion tip body 11. Said minimum lead angle is dependent on the diameter of diffusion tip body 11, the circumferential offset between the distal end of proximal flute section 121 and proximal end of distal flute section 122, and further the maximum width and depth of flute 12, or transverse flute section 123, respectively. If proximal and distal flute sections extend axially on the circumferential surface of diffusion tip body 11, i.e., have a lead angle of 90°, the minimum possible deflection angles are provided by the minimum required lead angle of transverse flute section 123, or the centerline thereof, respectively. The minimum possible deflection angles may be further reduced if first, proximal and second, distal flute sections 121 and 122 have a lead angle of less than 90°, i.e., are slanted relative to the proximal-distal axis of diffusion tip body 11.

As noted, in the depicted exemplary embodiment proximal flute section 121, distal flute section 122 and transverse flute section 123 all extend straight on the circumferential surface of diffusion tip body. That means, a flow through flute 12 is not deflected across a flute section, i.e., between boundary lines of a respective flute section on the circumferential surface of diffusion tip body 11. Consequently, the full flow deflection of a fluid flowing from a proximal end of flute 12 to a distal end of flute 12 will take place in the transitions from proximal flute section 121 to transverse flute section 123 and from transverse flute section 123 to distal flute section 122. It will thus be appreciated that in the depicted exemplary embodiment deflection angles A and B are cumulated deflection angles of a right-hand and left-hand deflection of a flow of a fluid which flows through flute 12, respectively. For instance, in the given embodiment, a fluid flowing from a proximal end of flute 12 to a distal end of flute 12, i.e., in the present exemplary embodiment, from proximal end 111 of diffusion tip 1 to distal end 112 of diffusion tip 1, will experience a cumulated right-hand deflection about an angle A at the transition from proximal flute section 121 to transverse flute section 123 and a cumulated left-hand deflection about an angle B at the transition from transverse flute section 123 to distal flute section 122.

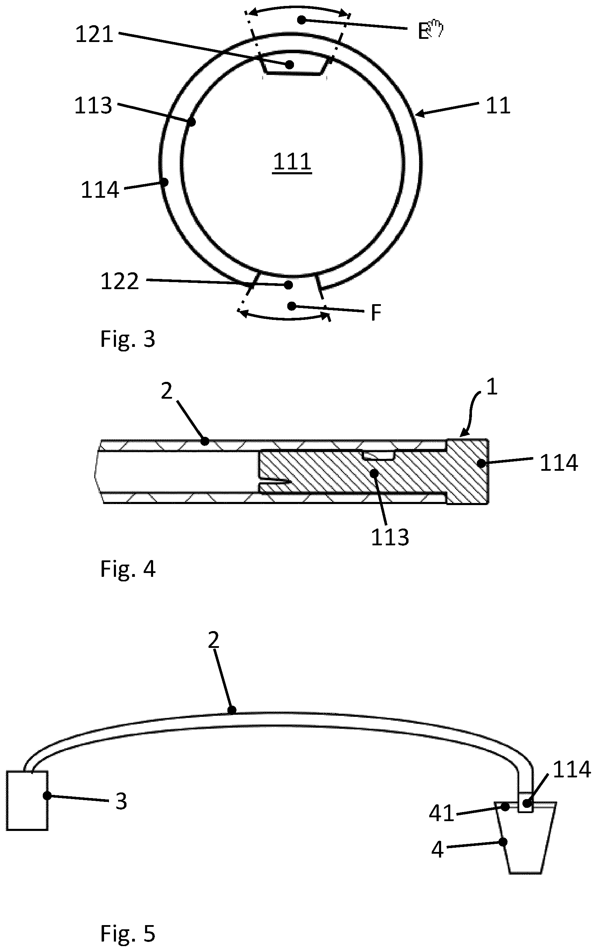

Figure 3 shows a view onto proximal face 111 of diffusion tip body 11. The view of figure 3 outlines the cross sections of proximal flute section 121 and distal flute section 122. Opposing side walls of proximal flute section 121 diverge from the ground of the flute towards the circumferential surface of diffusion tip body 11 and include an angle E. Opposing side walls of distal flute section 122 diverge from the ground of the flute towards the circumferential surface of diffusion tip body 11 and include an angle F. While not explicitly shown, the skilled person will readily appreciate that also opposing side walls of transverse flute section 123 may diverge from the ground of the flute towards the circumferential surface of diffusion tip body 11. Such, all opposing side walls of flute 12 diverge from the ground of the flute towards the circumferential surface of diffusion tip body 11 and include a draft angle which facilitates, for instance, removing diffusion tip 1 from an injection molding tool, which in turn facilitates manufacturing of diffusion tip 1 in general, results in a reduction of scrap, and helps to reduce manufacturing cost.

Figure 4 shows diffusion tip 1 assembled with a supply line, for instance a hose or tube, 2. Diffusion tip 1 may be any kind of diffusion tip described above. Proximal section 113 of diffusion tip body 11 is received within supply line 2, while distal section 114 of diffusion tip body 11 has a cross-sectional dimension which is too large to fit inside supply line 2. The transition from proximal section 113 to distal section 114 provides an abutment shoulder for an axial end of supply line 2. Proximal section 113 may be dimensioned and configured to be closely embraced by supply line 2 in an interference fit. The section of flute 12 which is provided on proximal section 113 accordingly forms a closed flow channel in interaction with an inner surface of supply line 2. In other embodiments, where diffusion tip body 11 does not comprise a relatively thickened proximal section, the entire diffusion tip body may be dimensioned and configured to be closely embraced by supply line 2 in an interference fit.

Figure 5 schematically outlines the use of a titration device comprising a source of titration agent 3. Supply line 2 is connected, at a first end, to the source of titration agent 3. At a second end, supply line 2 is equipped with a diffusion tip of any type herein disclosed, as for instance outlined in connection with figure 4. A distal section 114 of the diffusion tip, or the diffusion tip body, respectively, terminates, in the present embodiment, supply line 2. Distal section 114 is at least partly immersed into a sample liquid contained in beaker 4. Titration agent from the source of titration agent 3 may thus be provided through supply line 2 into the sample liquid below a surface 41 of the sample liquid. The siphon-type flow channel formed by flute 12 on the circumferential surface of diffusion tip body 11 yields the advantages of a siphon means initially described, while, owing to the smaller deflection angles, yielding less pressure losses when titration agent is dosed into the sample, which in turn facilitates fine dosing of titrating agent and yields in increased precision of the measurement, and significantly reducing the tendency to clogging.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

Reference signs list

| 1 | Diffusion tip |
|---|---|
| 2 | Supply line |
| 3 | Source of titration agent |
| 4 | Beaker containing sample liquid |
| 11 | Diffusion tip body |
| 12 | Flute |
| 41 | Surface of sample liquid |
| 111 | Proximal face or proximal end of diffusion tip body |
| 112 | Distal face or distal end of diffusion tip body |
| 113 | Proximal section of diffusion tip body |
| 114 | Distal section of diffusion tip body |
| 121 | First, proximal flute section |
| 122 | Second, distal flute section |
| 123 | Transverse flute section |
| 124 | Proximal boundary line of transverse flute section |
| 125 | Distal boundary line of transverse flute section |
| 1241 | Most distal point of proximal boundary line of transverse flute section |
| 1251 | Most proximal point of distal boundary line of transverse flute section |
| $\Delta h$ | Axial offset between most distal point of proximal boundary line of transverse flute section and most proximal point of distal boundary line of transverse flute section |
| A | Transition or deflection angle |
| B | Transition or deflection angle |
| C | Angle included between first, proximal flute section and transverse flute section |
| D | Angle included between second, distal flute section and transverse flute section |
| E | Draft angle |
| F | Draft angle |

**Claims**

1. A diffusion tip (1) for a titration line (2), the diffusion tip comprising a body (11) having a proximal end (111) and a distal end (112) and a circumferential surface, wherein a flute (12) is provided in the circumferential surface of the diffusion tip body (11), the flute having a proximal end and a distal end,

the flute (12) having a first flute section (121) extending from the proximal end of the flute to a distal end of the first flute section, wherein the distal end of the first flute section is proximal from the distal end of the diffusion tip body (11), the flute (12) having a second flute section (122) extending from a proximal end of the second flute section to the distal end of the flute, wherein the proximal end of the second flute section (122) is distal from the proximal end of the body (11) and proximal from the distal end of the first flute section (121), whereby the first flute section and the second flute section have an axial overlap on the diffusion tip body (11), while the first flute section and the second flute section do not intersect,
the flute further having a transverse flute section (123) connecting the first flute section (121) and the second flute section (122) and extending between the first flute section and the second flute section, wherein the transverse flute section (123) joins the first flute section (121) at a first proximal-distal position of the diffusion tip body and the transverse flute section joins the second flute section at a second proximal-distal position of the diffusion tip body, wherein the second proximal-distal position is proximal from the first proximal-distal position.

2. The diffusion tip according to the preceding claim, wherein a most distal point (1241) of a proximal boundary line (124) of the transverse flute section (123) is distal from a most proximal point (1251) of a distal boundary line (125) of the transverse flute section (123).

3. The diffusion tip according to any preceding claim, wherein the transverse flute section (123) joins the first flute section (121) at the distal end of the first flute section and/or wherein the transverse flute section (123) joins the second flute section (122) at the proximal end of the second flute section.

4. The diffusion tip according to any preceding claim, wherein at least one of the first flute section (121) and/or the second flute section (122) and/or the transverse flute section (123) is a straight flow section.

5. The diffusion tip according to any preceding claim, wherein the flute (12) is provided such that a fluid flowing from the proximal end of the flute to the distal end of the flute is deflected left-hand by a cumulated left-hand deflection angle (B) and deflected right-hand by a cumulated right-hand deflection angle (A), wherein at least one of the cumulated left-hand deflection angle and the cumulated right-hand deflection angle is less than 180° , preferably at least one of the of the cumulated left-hand deflection angle (B) and the cumulated right-hand deflection angle (A) is less than 150° .

6. The diffusion tip according to any of the preceding claims, wherein the transverse flute section (123) is a straight flute section, and the first flute section (121) is a straight flute section, wherein an angle (C) included between the first flute section and the transverse flute section is greater than 0° and smaller than 90° and in particular is at least one of 30° or more and/or 60° or less.

7. The diffusion tip according to any of the preceding claims, wherein the transverse flute section (123) is a straight flue section, and the second flute section (122) is a straight flute section, wherein an angle (B) included between the transverse flute section and the second flute section is greater than 0° and smaller than 90° and in particular is at least one of 30° or more and/or 60° or less.

8. The diffusion tip according to any preceding claim, wherein the first flute section (121) and the second flute section (122) both have, along their extent between the respective distal and proximal ends, a constant circumferential angular position on the surface of the diffusion tip body (11) around an axis of the diffusion tip body (11).

9. The diffusion tip according to any preceding claim, wherein, in the proximal-distal section of the diffusion tip body in which the first flute section (121) and the second flute section (122) overlap axially, the first flute section (121) and the second flute section (122) are offset with respect to each other along the circumference of the diffusion tip body (11) at each proximal-distal position, wherein a circumferential angular distance between the first and second flute sections is 45° or more, in particular 50° or more and more in particular 60° or more.

10. The diffusion tip according to any of the preceding claim, wherein the first flute section (121) extends from the proximal end of the diffusion tip body and opens on a proximal face (111) of the diffusion tip body.

11. The diffusion tip according to any preceding claim, wherein the second flute section (122) extends to the distal end of the diffusion tip body and opens on a distal face (112) of the diffusion tip body.

**12.** The diffusion tip according to any preceding claim, wherein at least a proximal section (113) of the diffusion tip body (11) is configured to be received within a supply line.

**13.** The diffusion tip according to any preceding claim, wherein a distal section (114) of the diffusion tip body (11) has a cross-sectional dimension which is larger than a cross-sectional dimension of the proximal section.

**14.** The diffusion tip according to any preceding claim, wherein opposing side walls of the flute (12) diverge from the ground of the flute towards the circumferential surface of the diffusion tip body.

**15.** A titration device, the titration device comprising a supply line (2), wherein a first end of the supply line is connected to a source of a titration agent (3) and a second end of the supply line is provided with a diffusion tip (1) according to any preceding claim, wherein at least a part of the diffusion tip is received within the supply line and at least the first flute section (121) and the transverse flute section (123) and a proximal section of the second flute section (122) are located inside the supply line and, together with an inner wall of the supply line, form a flow channel on the circumferential surface of the body of the diffusion tip which is open towards the interior of the supply line and at the second end of the supply line.

Fig. 1

Fig. 2

121

113

114

122

111

11

E

F

Fig. 3

2

1

114

113

Fig. 4

2

114

3

41

4

Fig. 5

Europäisches
Patentamt

European
Patent Office

Office européen
des brevets

**EUROPEAN SEARCH REPORT**

Application Number

EP 24 16 1842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br><br>A | US 4 719 086 A (LANG KARL [CH])<br>12 January 1988 (1988-01-12)<br>* column 2, line 51 - column 3, line 25 *<br>* figure 1 *<br>- - - - - | 1-4,8-15<br><br>5-7 | INV.<br>B01L3/02 |

TECHNICAL FIELDS
SEARCHED        (IPC)

B01L

The present search report has been drawn up for all claims

| Place of search | Date of completion of the search | Examiner |
|---|---|---|
| The Hague | 27 June 2024 | Bischoff, Laura |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 1842

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2024

| Patent document cited in search report | | Publication date | Patent family member(s) | | Publication date |
|---|---|---|---|---|---|
| US 4719086 | A | 12-01-1988 | CH | 660131 A5 | 31-03-1987 |
| | | | DE | 3421076 A1 | 31-01-1985 |
| | | | DE | 8417260 U1 | 13-09-1984 |
| | | | FR | 2549391 A1 | 25-01-1985 |
| | | | JP | H053977 Y2 | 29-01-1993 |
| | | | JP | S6019962 U | 12-02-1985 |
| | | | US | 4719086 A | 12-01-1988 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6182517 B

- US 4719086 A